# EUROPÄISCHE PATENTSCHRIFT

(11) **EP 3 296 070 B1**
(45) Veröffentlichungstag und Bekanntmachung des Hinweises auf die Patenterteilung: **07.08.2019**
(21) Anmeldenummer: 17187877.0
(22) Anmeldetag: 25.08.2017
(51) Int. Cl.: B25J 17/02, B25J 15/00

(54) **GREIFER FÜR EINEN ROBOTER**
GRIPPER FOR A ROBOT
GRAPPIN POUR UN ROBOT

(30) Priorität: 06.09.2016 DE 102016216853
(43) Veröffentlichungstag der Anmeldung: 21.03.2018
(73) Patentinhaber: E. Braun GmbH Entwicklung und Vertrieb von technischem Zubehör, 91126 Kammerstein (DE)
(72) Erfinder: BRAUN, Andreas, 91126 Schwabach (DE); SCHNEIDER, Jörg, 91126 Kammerstein (DE)
(74) Vertreter: Dr. Gassner & Partner mbB

(56) Entgegenhaltungen:
- DE-A1- 3 004 014
- DE-A1- 3 611 806
- DE-A1-102006 028 219
- DE-A1-102015 005 213
- GB-A- 2 140 335
- JP-A- H1 133 964
- JP-A- S61 230 893
- JP-A- 2004 066 364

## Beschreibung

Die Erfindung betrifft einen Greifer für einen Roboter.

In vielen Produktionsbereichen werden Roboter in zunehmendem Maße für Montagetätigkeiten eingesetzt. Mittels des Greifers werden einzelne Objekte, Komponenten oder Bauteile gegriffen und montiert, indem eine Reihe von Montageschritten automatisch durchgeführt wird. Die einzelnen Objekte können beispielsweise ungeordnet in einem Behälter oder geordnet, beispielsweise gestapelt, bereitgestellt werden. Für bestimmte Anwendungen ist es erforderlich, eine Vielzahl unterschiedlicher Einzelteile zu montieren. Dabei bewegt sich der Greifer abwechselnd zwischen einem Montageplatz und den losen oder z. B. gestapelten Einzelteilen hin und her. Bei einer hohen Anzahl unterschiedlicher Objekte kann dies dazu führen, dass jedes Objekt einzeln von dem Greifer geholt werden muss, wodurch sich eine lange Montagezeit ergibt.

Ein spezielles Anwendungsgebiet für einen derartigen Greifer ist die Bestückung von sogenannten "Hutschienen" mit elektrischen Komponenten, insbesondere Klemmen. Die bestückten Hutschienen werden anschließend in einem Schaltschrankgehäuse eingebaut und verdrahtet. Derartige Schaltschränke werden sowohl in der Gebäudeinstallationstechnik als auch zur elektrischen Steuerung von Maschinen und Anlagen benötigt.

Bei der Bestückung von Hutschienen besteht das Problem, dass häufig eine Vielzahl unterschiedlicher Komponenten zu montieren ist, insbesondere unterschiedlich geformte Klemmen, die sich sowohl hinsichtlich ihrer Form als auch hinsichtlich ihrer Größe unterscheiden. Häufig werden auch Produkte verschiedener Hersteller eingesetzt, wodurch sich die Variantenvielfalt erhöht. In der Praxis werden daher bisher auch größere Stückzahlen identischer Schaltschränke bzw. Hutschienen manuell bestückt. Es ist allerdings schwierig, dabei eine 100%ige Fehlerfreiheit sicherzustellen bzw. eine falsche oder eine fehlende Klemme zu finden. Ein weiterer Nachteil ist darin zu sehen, dass die bisher übliche manuelle Montage einen beträchtlichen Zeitbedarf erfordert.

JPS61230893 beschreibt einen Greifer für einen Roboter mit mehreren, schwimmend gelagerten Greifelementen.

Es sind bereits Versuche unternommen worden, Hutschienen mittels Robotergreifarmen zu bestücken. Wenn die Objekte, beispielsweise Klemmen, gestapelt bereitgestellt werden, trat dabei das Problem auf, dass sich kleinste Form- oder Lagetoleranzen eines Bauteils vervielfachen, wenn ein Stapel von beispielsweise 100 Objekten bereitgestellt wird. Diese Toleranzen führen dazu, dass das zu greifende Objekt nicht exakt positioniert ist, wodurch das Greifen erschwert wird. Es hat sich auch herausgestellt, dass derartige Objekte wie Klemmen gewisse Formtoleranzen zwischen einzelnen Chargen aufweisen, die ein exaktes Greifen erschweren.

Der Erfindung liegt daher die Aufgabe zu Grunde, einen Greifer für einen Roboter anzugeben, der ein zuverlässiges Aufnehmen von Objekten ermöglicht, selbst beim Vorhandensein von Form- oder Lagetoleranzen.

Zur Lösung dieser Aufgabe ist bei einem Greifer der eingangs genannten Art erfindungsgemäß vorgesehen, dass er einen um eine Drehachse schwenkbaren Grundkörper aufweist, von dem sich mehrere in Umfangsrichtung verteilt angeordnete Halterungen erstrecken, an denen jeweils eine Greiferbacke mittels einer schaltbaren Lagerung angebracht ist, wobei die Lagerung zwischen einem ersten Zustand, in dem die Greiferbacke schwimmend an der Halterung gelagert ist, und einem zweiten Zustand, in dem die Greiferbacke starr mit der Halterung verbunden ist, umschaltbar ist, wobei das Federelement einen ersten gekrümmten, in Längsrichtung einer Ausnehmung der Halterung verlaufenden Abschnitt umfasst, der eine fest mit der Halterung verbundene Führung durchsetzt und sich bis zu Ecken eines Körpers der Greiferbacke erstreckt, wobei sich von beiden Ecken gebogene Abschnitte bis zu benachbarten Ecken erstrecken, die durch einen weiteren, parallel zu dem ersten gekrümmten Abschnitt angeordneten gekrümmten, in Längsrichtung der Ausnehmung der Halterung verlaufenden und die Führung durchsetzenden Abschnitt verbunden sind.

Die Erfindung beruht auf der Erkenntnis, dass eine zuverlässige Aufnahme eines zu greifenden Objekts sichergestellt werden kann, wenn die Greiferbacke eine schaltbare Lagerung aufweist. Die Lagerung ist so ausgebildet, dass die Greiferbacke schwimmend gelagert ist. Das bedeutet, dass die Greiferbacke "weich" gelagert ist, so dass Formtoleranzen oder Lagetoleranzen der zu greifenden Klemme oder eines anderen zu greifenden Objekts ausgeglichen werden können. Durch die schwimmende Lagerung folgt die Greiferbacke der Position oder Form des zu greifenden Objekts, so dass dieses trotz der vorhandenen Abweichungen zuverlässig gegriffen werden kann. Nach dem Aufnehmen des Objekts durch die Greiferbacke wird die Lagerung so geschaltet, dass die Greiferbacke starr mit der Halterung verbunden ist. Diese starre Verbindung positioniert das aufgenommene Teil, so dass es exakt an einer gewünschten Position auf der Hutschiene abgesetzt werden kann. Zum Aufnehmen eines weiteren Objekts wird die Lagerung anschließend wieder so geschaltet, dass die Greiferbacke schwimmend bzw. beweglich an der Halterung gelagert ist.

Das Federelement ermöglicht die schwimmende Lagerung der Greiferbacke, da es Relativbewegungen zwischen der Halterung und der Greiferbacke in mehreren Richtungen erlaubt.

Das Federelement besteht erfindungsgemäß aus einem Federdraht. Eine derartige elastische Lagerung erfordert lediglich einen kleinen Platzbedarf und kann so einfach in einen Greifer integriert werden.

Das Federelement ist an wenigstens zwei Stellen mit der Halterung und an wenigstens vier Stellen mit der Greiferbacke verbunden. Somit kann die Greiferbacke federelastisch mit der Halterung verbunden werden. Das Federelement ist im Bereich der Ecken der Greiferbacke mit der Halterung verbunden.

Mit besonderem Vorteil kann es bei dem erfindungsgemäßen Greifer vorgesehen sein, dass die Lagerung schaltbare Zapfen aufweist, die entweder an der Greiferbacke oder an der Halterung angeordnet und in eine Ausnehmung der jeweiligen anderen Komponente verschiebbar sind. Vorzugsweise umfasst die Lagerung wenigstens zwei Zapfen, die an entgegengesetzten Seiten der Greiferbacke bzw. der Halterung angeordnet sind. Vorzugsweise können zwei nebeneinander angeordnete Zapfen vorhanden sein. Dementsprechend kann eine bevorzugte Ausführung insgesamt vier Zapfen aufweisen, durch deren Betätigung eine kraft- und/oder formschlüssige Verbindung zwischen der Greiferbacke und der Halterung erzeugt werden kann. Die Zapfen können beispielsweise pneumatisch oder elektrisch betätigt werden. Die Ausnehmung ist an die Form und Größe des dazugehörigen Zapfens angepasst. Es kann auch ein beispielsweise konischer Einlaufbereich vorgesehen sein, der das Einfahren der Zapfen in die Ausnehmungen erleichtert. In ähnlicher Weise kann ein Zapfen ein abgerundetes oder konisches Ende aufweisen.

Bei dem erfindungsgemäßen Greifer kann es vorgesehen sein, dass eine Greiferbacke zwei oder drei Greiferkomponenten aufweist, die als Spannbacken ausgebildet sind, wobei wenigstens eine Greiferkomponente zum Aufnehmen eines Objekts gesteuert bewegbar ist. Die Greiferkomponenten können zum Aufnehmen eines Objekts auseinander bewegt werden, vorzugsweise in zueinander senkrechten Richtungen. Nach dem Aufnehmen des Objekts fahren die Greiferkomponenten wieder zusammen, wodurch das Objekt kraft- und/oder formschlüssig gehalten wird.

Eine weitere bevorzugte Variante des erfindungsgemäßen Greifers sieht vor, dass eine Greiferbacke eine erste Ausnehmung, die an die Außenkontur eines ersten zu greifenden Objekts angepasst ist, sowie wenigstens eine zweite Ausnehmung aufweist, die an die Außenkontur des weiteren zu greifenden Objekts angepasst ist, wobei die beiden Ausnehmungen unterschiedlich geformt sind, sich wenigstens teilweise überdecken und bezogen auf die Außenkontur in unterschiedlichen Ebenen angeordnet sind. Somit kann ein Greifer beispielsweise drei unterschiedliche Objekte pro Greiferbacke aufnehmen. Bei einem drei Greiferbacken aufweisenden Greifer können somit beispielsweise neun unterschiedliche Objekte gegriffen werden. Zu jedem Zeitpunkt kann eine Greiferbacke lediglich ein bestimmtes Objekt greifen. Da ein Greifer z. B. drei Objekte aufnehmen kann, können drei Objekte nacheinander aufgenommen und unmittelbar nacheinander auf einer Hutschiene montiert werden.

Bei dem erfindungsgemäßen Greifer kann es vorgesehen sein, dass eine Greiferbacke eine Überlastsicherung aufweist. Die Überlastsicherung verhindert bei einem nicht korrekt gegriffenen Bauteil eine Beschädigung des Greifers oder der Hutschiene.

Bei dem erfindungsgemäßen Greifer kann es auch vorgesehen sein, dass eine Greiferbacke einen Vakuumanschluss und/oder einen Druckluftanschluss aufweist. Mittels des Vakuumanschlusses kann ein zu greifendes Objekt angesaugt werden. Mittels des Druckluftanschlusses kann das Auswerfen eines Objekts nach der Montage auf der Hutschiene erleichtert werden.

Der erfindungsgemäße Greifer kann ein Mittel zum Steuern oder Regeln einer Greifkraft aufweisen. Dadurch kann die Greifkraft individuell an zu greifende Objekte angepasst werden. Auf diese Weise kann verhindert werden, dass ein dünnes, flexibles Bauteil durch eine zu große Greifkraft gewölbt oder gebogen wird.

Bei dem erfindungsgemäßen Greifer wird es bevorzugt, dass er einen RFID-Sensor aufweist. Mittels des RFID-Sensors kann eine Codierung eines gegriffenen Objekts erfasst werden. Dadurch kann ein Montageprozess vollständig dokumentiert werden. Durch Erfassen eines RFID-Codes kann auch überprüft werden, ob der Greifer das richtige Bauteil aufgenommen hat.

Die Erfindung wird nachfolgend anhand eines Ausführungsbeispiels unter Bezugnahme auf die Zeichnungen näher erläutert. Die Zeichnungen sind schematische Darstellungen und zeigen:
- Fig. 1: eine perspektivische Ansicht eines erfindungsgemäßen Greifers,
- Fig. 2: eine vergrößerte Ansicht der Halterung des Greifers,
- Fig. 3: eine Ansicht einer Greiferbacke von hinten, und
- Fig. 4: den Greifer in einer axialen Ansicht.

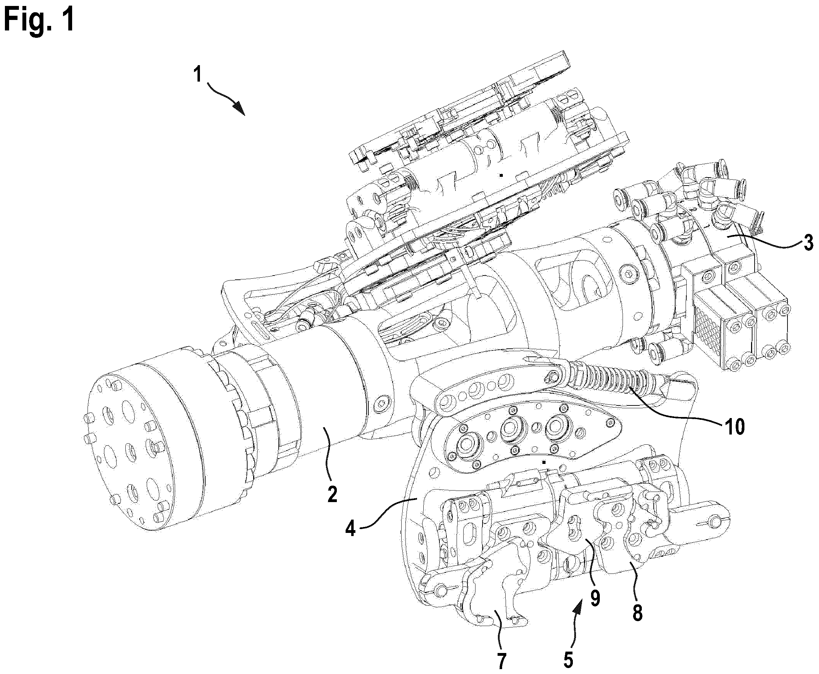

Fig. 1 ist eine perspektivische Ansicht eines Greifers 1 für einen Roboter. Der Greifer 1 weist einen um eine Drehachse schwenkbaren Grundkörper 2 auf, der zumindest näherungsweise zylinderförmig ausgebildet ist. Ein Ende 3 des Greifers 1 ist mit einer Aufnahme eines Roboterarms verbindbar.

Von dem Grundkörper 2 erstrecken sich in diesem Ausführungsbeispiel insgesamt drei in Umfangsrichtung verteilt angeordnete Halterungen 4, an denen jeweils eine Greiferbacke 5 mittels einer schaltbaren Lagerung angebracht ist.

In Fig. 1 erkennt man, dass die Greiferbacke 5 drei Greiferkomponenten 7, 8, 9 aufweist, die zum Aufnehmen eines Objekts gesteuert bewegbar sind. Zum Aufnehmen eines Objekts, beispielsweise einer elektrischen Klemme, werden die Greiferkomponenten 7, 8, 9 auseinander bewegt. Nach dem Aufnehmen eines Objekts werden sie wieder zueinander bewegt, wodurch das Objekt sicher gehalten wird.

Die Halterung 4 weist eine Überlastsicherung 10 mit einem Feder-Dämpfer-Element auf. Die Überlastsicherung 10 bildet eine Verbindung zwischen dem Grundkörper 2 und der Halterung 4. Bei einer Überlastung ermöglicht die Überlastsicherung 10 eine Verdrehung der Halterung 4, ohne dass der Greifer 1 oder die Hutschiene beschädigt werden. Die Überlastsicherung 10 weist einen einstellbaren Auslösepunkt auf.

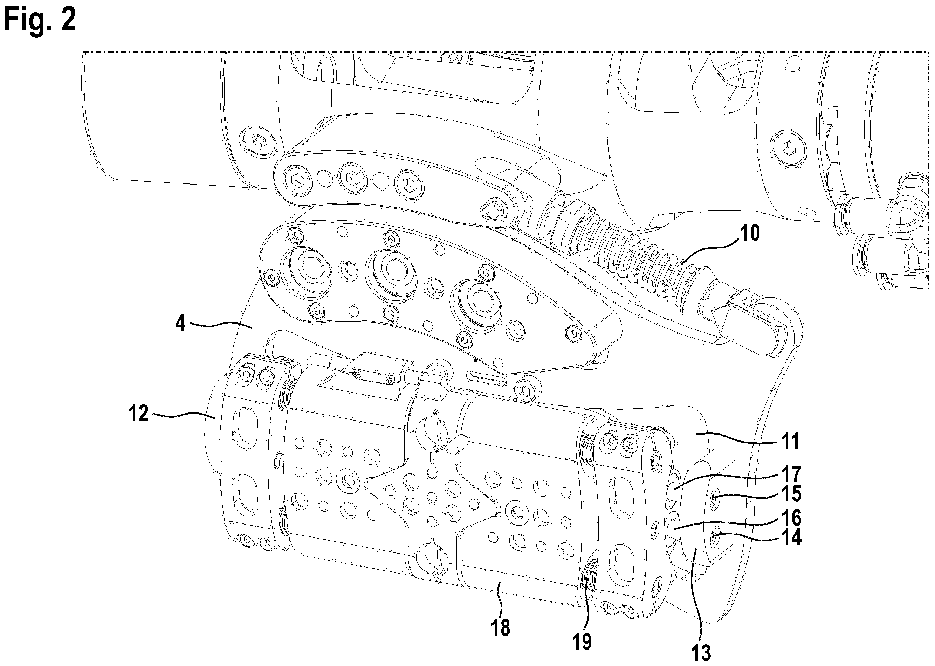

Fig. 2 ist eine vergrößerte Ansicht der Halterung 4, wobei aus Gründen der besseren Übersichtlichkeit die Greiferbacke 5 nicht dargestellt ist. Die Halterung 4 ist plattenförmig ausgebildet und weist eine Ausnehmung 11 auf. An beiden Enden sind an der Halterung 4 senkrecht abstehende Vorsprünge 12, 13 ausgebildet, die je zwei Ausnehmungen 14, 15 aufweisen. In diese Ausnehmungen 14, 15 greifen Zapfen 16, 17 ein, die an einem Körper 18, der eine schaltbare Lagerung bildet, angeordnet sind. Der Körper 18 ist mehrteilig ausgebildet und dient als Träger für die in Fig. 2 nicht dargestellten Greiferkomponenten 7, 8, 9. Die Zapfen 16, 17 sind mit pneumatischen Zylindern verbunden, so dass die Zapfen 16, 17 gesteuert in die Ausnehmungen 14, 15 der Halterung 4 bewegt werden können. In diesem Zustand, d. h. wenn sich die Zapfen 16, 17 in den Ausnehmungen 14, 15 befinden, ist der Greifer 1 über den Körper 18 starr mit der Halterung 4 und somit auch mit dem Grundkörper 2 des Greifers 1 verbunden. Dieser Zustand liegt dann vor, wenn aufgenommene Bauteile auf einer Hutschiene abgesetzt, platziert und montiert werden sollen. In Fig. 2 erkennt man, dass zwischen den verschiedenen Komponenten des Körpers 18 Federn 19 angeordnet sind, durch die eine genaue Positionierung der Greiferkomponenten 7, 8, 9 sichergestellt wird.

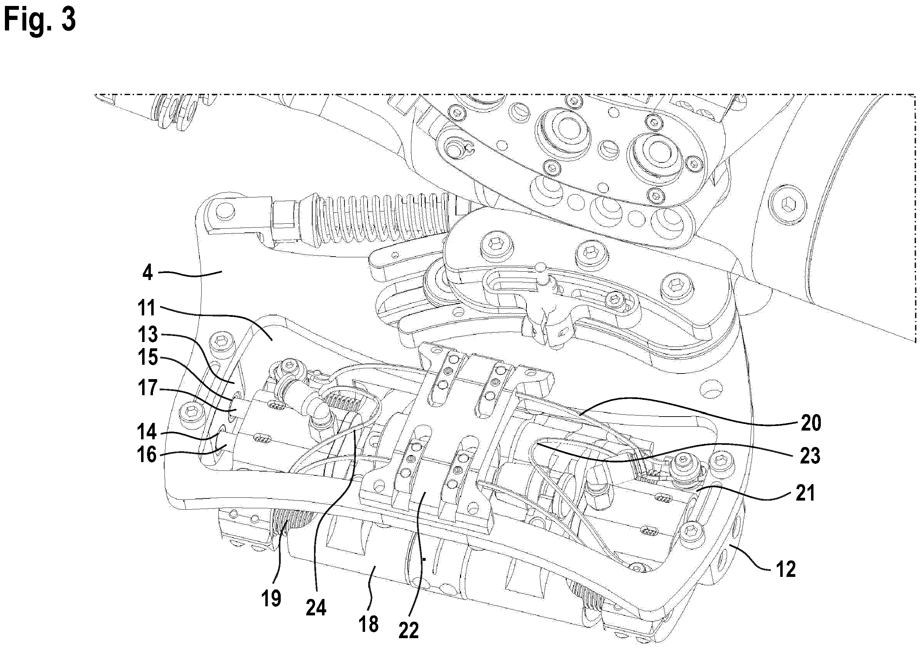

Fig. 3 zeigt den Körper 18 der Greiferbacke 5 von hinten. Die Halterung 4 ist über ein als Federdraht 20 ausgebildetes Federelement an vier Ecken 21 mit dem Körper 18 der Greiferbacke 5 elastisch verbunden. Zusätzlich durchsetzt der Federdraht 20 an zwei Stellen eine Führung 22, die fest mit der Halterung 4 verbunden ist. In Fig. 3 erkennt man, dass der Federdraht 20 zwei näherungsweise parallele, gekrümmte Abschnitte aufweist, die in Längsrichtung der Ausnehmung 11 der Halterung 4 verlaufen. Zusätzlich umfasst der Federdraht 20 zwei gebogene Abschnitte 23, 24. Durch den Federdraht 20 wird eine schwimmende Lagerung der Greiferbacke 5 realisiert, die es ermöglicht, ein Objekt auch dann aufzunehmen, wenn sich dieses auf Grund von Form- oder Lagetoleranzen nicht exakt an der richtigen Position befindet oder wenn das Objekt selbst Toleranzen aufweist. Durch die schwimmende Lagerung kann die Greiferbacke 5 das Objekt dennoch erfassen und aufnehmen. Im aufgenommenen Zustand werden die schaltbaren Zapfen 16, 17 so bewegt, dass sie in die Ausnehmungen 14, 15 der Vorsprünge 12, 13 eingreifen. In diesem verspannten Zustand können aufgenommene Objekte mit hoher Genauigkeit auf einer Hutschiene abgesetzt und montiert werden.

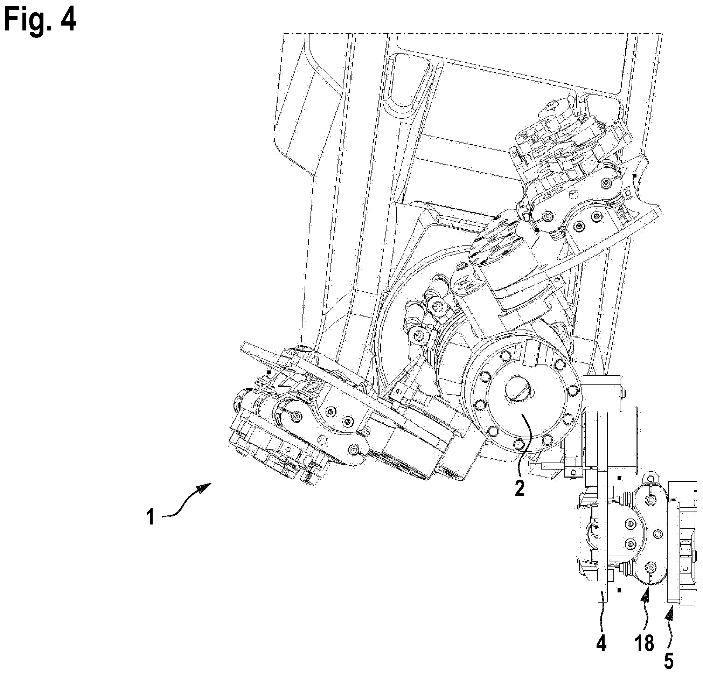

Fig. 4 zeigt den Greifer 1 in einer axialen Ansicht. Man erkennt, dass der Greifer 1 insgesamt drei in Umfangsrichtung angeordnete Greiferbacken 5 aufweist.

### Bezugszeichenliste

- 1: Greifer
- 2: Grundkörper
- 3: Ende
- 4: Halterung
- 5: Greiferbacke
- 7, 8, 9: Greiferkomponente
- 10: Überlastsicherung
- 11: Ausnehmung
- 12, 13: Vorsprung
- 14, 15: Ausnehmung
- 16, 17: Zapfen
- 18: Körper
- 19: Feder
- 20: Federdraht
- 21: Ecke
- 22: Führung
- 23, 24: Abschnitt

## Patentansprüche

1. Greifer (1) für einen Roboter, der einen um eine Drehachse schwenkbaren Grundkörper (2) aufweist, von dem sich mehrere in Umfangsrichtung verteilt angeordnete Halterungen (4) erstrecken, an denen jeweils eine Greiferbacke (5) mittels einer schaltbaren Lagerung angebracht ist, **dadurch gekennzeichnet, dass** die Lagerung zwischen einem ersten Zustand, in dem die Greiferbacke (5) schwimmend an der Halterung (4) gelagert ist, und einem zweiten Zustand, in dem die Greiferbacke (5) starr mit der Halterung (4) verbunden ist, umschaltbar ist, wobei die Lagerung ein aus Federdraht (20) bestehendes Federelement umfasst, mittels dem die Greiferbacke (5) an der Halterung (4) gelagert ist, wobei das Federelement einen ersten gekrümmten, in Längsrichtung einer Ausnehmung (11) der Halterung (4) verlaufenden Abschnitt umfasst, der eine fest mit der Halterung (4) verbundene Führung (22) durchsetzt und sich bis zu Ecken (21) eines Körpers (18) der Greiferbacke (5) erstreckt, wobei sich von beiden Ecken (21) gebogene Abschnitte (23, 24) bis zu benachbarten Ecken (21) erstrecken, die durch einen weiteren, parallel zu dem ersten gekrümmten Abschnitt angeordneten gekrümmten, in Längsrichtung der Ausnehmung (11) der Halterung (4) verlaufenden und die Führung (22) durchsetzenden Abschnitt verbunden sind.

2. Greifer (1) nach Anspruch 1, **dadurch gekennzeichnet, dass** das Federelement (19) an wenigstens zwei Stellen an der Halterung (4) und an wenigstens vier Stellen mit der Greiferbacke (5) verbunden ist, vorzugsweise im Bereich der Ecken (21) der Greiferbacke (5).

3. Greifer (1) nach einem der vorangehenden Ansprüche, **dadurch gekennzeichnet, dass** die Lagerung schaltbare Zapfen (16, 17) aufweist, die entweder an der Greiferbacke (5) oder an der Halterung (4) angeordnet sind und in eine Ausnehmung (14, 15) der jeweiligen anderen Komponente (7, 8, 9) verschiebbar sind.

4. Greifer (1) nach Anspruch 3, **dadurch gekennzeichnet, dass** ein Zapfen (16, 17) ein konisches Ende aufweist.

5. Greifer (1) nach einem der vorangehenden Ansprüche, **dadurch gekennzeichnet, dass** eine Greiferbacke (5) zwei oder drei Greiferkomponenten (7, 8, 9) aufweist, wobei wenigstens eine Greiferkomponente (7, 8, 9) zum Aufnehmen eines Objekts gesteuert bewegbar ist.

6. Greifer (1) nach einem der vorangehenden Ansprüche, **dadurch gekennzeichnet, dass** eine Greifbacke (5), eine erste Ausnehmung aufweist, die an die Außenkontur eines ersten zu greifenden Objekts angepasst ist sowie wenigstens eine zweite Ausnehmung, die an die Außenkontur eines weiteren zu greifenden Objekts angepasst ist, wobei die beiden Ausnehmungen unterschiedlich geformt sind, sich wenigstens teilweise überdecken und bezogen auf die Außenkontur in unterschiedlichen Ebenen angeordnet sind.

7. Greifer (1) nach einem der vorangehenden Ansprüche, **dadurch gekennzeichnet, dass** eine Greiferbacke (5) eine Überlastsicherung (10) mit einstellbarem Auslösepunkt aufweist.

8. Greifer (1) nach einem der vorangehenden Ansprüche, **dadurch gekennzeichnet, dass** eine Greiferbacke (5) einen Vakuumanschluss und/oder einen Druckluftanschluss aufweist.

9. Greifer (1) nach einem der vorangehenden Ansprüche, **dadurch gekennzeichnet, dass** es ein Mittel zum Steuern oder Regeln einer Greifkraft aufweist.

10. Greifer (1) nach einem der vorangehenden Ansprüche, **dadurch gekennzeichnet, dass** er einen RFID-Sensor aufweist.

## Claims

1. A gripper (1) for a robot comprising a base body (2) pivotable about a rotational axis, from which base body a plurality of circumferentially arranged supports (4) extend, wherein a respective gripper jaw (5) is attached to each support by means of a switchable bearing, **characterized in that** the bearing is switchable between a first state, where the gripper jaw (5) is floatingly mounted to the support (4), and a second state, where the gripper jaw (5) is rigidly connected to the support (4), the bearing comprising a spring element consisting of spring wire (20), by means of which spring element the gripper jaw (5) is floatingly mounted to the support (4), the gripper jaw (5) being mounted to the support (4), the spring element comprising a first curved section extending in the longitudinal direction of a recess (11) in the support (4), the curved section passing through a guide (22) which is fixedly connected to the support (4), and the curved section extending to the corners (21) of a body (18) of the gripper jaw (5), wherein curved portions (23, 24) extend from both corners (21) to adjacent corners (21) connected by another curved portion arranged in parallel to the first curved portion and extending in the longitudinal direction of the recess (11) of the support (4) and passing through the guide (22).

2. The gripper (1) according to claim 1, **characterized in that** the spring element (19) is connected to the support (4) at at least two positions, and is connected to the gripper jaw (5) at at least four positions, preferably in the region of the corners (21) of the gripper jaw (5).

3. The gripper (1) according to one of the preceding claims, **characterized in that** the bearing has switchable pins (16, 17) which are arranged either on the gripper jaw (5) or on the support (4), and are able to be displaced into a recess (14, 15) of the respective other component (7, 8, 9).

4. The gripper (1) according to claim 3, **characterized in that** a pin (16, 17) has a conical end.

5. The gripper (1) according to one of the preceding claims, **characterized in that** a gripper jaw (5) has two or three gripper components (7, 8, 9), wherein at least one gripper component (7, 8, 9) is movable in a controlled manner to take up an object.

6. The gripper (1) according to one of the preceding claims, **characterized in that** a gripper jaw (5) has a first recess which is adapted to the outer contour of a first object to be gripped and at least a second recess which is adapted to the outer contour of another object to be gripped, wherein the two recesses are of different shape, at least partially overlapping and being arranged in different planes in relation to the outer contour.

7. The gripper (1) according to one of the preceding claims, **characterized in that** a gripper jaw (5) has an overload protection (10) comprising an adjustable triggering point.

8. The gripper (1) according to one of the preceding claims, **characterized in that** a gripper jaw (5) comprises a vacuum connection and/or a compressed air connection.

9. The gripper (1) according to one of the preceding claims, **characterized in that** it comprises means for controlling or regulating a gripping force.

10. The gripper (1) according to one of the preceding claims, **characterized in that** it comprises an RFID sensor.

## Revendications

1. Préhenseur (1) pour un robot qui comporte un corps de base (2) pouvant pivoter autour d'un axe de rotation, à partir duquel plusieurs supports (4) répartis dans le sens périphérique s'étendent, sur lesquels respectivement un mors (5) est monté au moyen d'un palier commutable, **caractérisé en ce que** le palier est commutable entre un premier état dans lequel le mors (5) est monté de manière flottante au support (4) et un deuxième état dans lequel le mors (5) est relié de manière fixe au support (4), **en ce que** le palier comporte un élément à ressort constitué d'un fil d'acier pour ressort (20) au moyen duquel le mors (5) est monté au support (4), **en ce que** l'élément à ressort comporte une première section courbe s'étendant dans le sens longitudinal d'un évidement (11) du support (4), laquelle section traverse un guidage (22) raccordé de manière fixe au support (4) et qui s'étend jusqu'à des arêtes (21) d'un corps (18) du mors (5), **en ce que** des sections (23, 24) courbées s'étendent des deux arêtes (21) à des arêtes adjacentes (21), qui sont reliées par une autre section courbe, qui est disposée parallèlement à la première section courbe, allant dans le sens longitudinal de l'évidement (11) du support (4) et traversant le guidage (22).

2. Préhenseur (1) selon la revendication 1, **caractérisé en ce que** l'élément à ressort (19) est relié au moins en deux points au support (4) et au moins en quatre points au mors (5), de préférence au niveau des arêtes (21) du mors (5).

3. Préhenseur (1) selon l'une des revendications précédentes, **caractérisé en ce que** le palier comporte des pivots (16, 17) commutables qui sont disposés soit sur le mors (5) ou sur le support (4) et qui peuvent être déplacés dans un évidement (14, 15) des autres composants (7, 8, 9) respectifs.

4. Préhenseur (1) selon la revendication 3, **caractérisé en ce qu'**un pivot (16, 17) comporte une extrémité conique.

5. Préhenseur (1) selon l'une des revendications précédentes, **caractérisé en ce qu'**un mors (5) comporte deux ou trois composants de préhension (7, 8, 9), **en ce qu'**au moins un composant de préhension (7, 8, 9) peut être déplacé par commande pour la réception d'un objet.

6. Préhenseur (1) selon l'une des revendications précédentes, **caractérisé en ce qu'**un mors (5) comporte un premier évidement qui est adapté au contour extérieur d'un premier objet à saisir ainsi qu'au moins un second évidement qui est adapté au contour extérieur d'un autre objet à saisir, **en ce que** les deux évidements sont formés différemment, se recouvrent au moins partiellement et par rapport au contour extérieur sont disposés dans différents plans.

7. Préhenseur (1) selon l'une des revendications précédentes, **caractérisé en ce qu'**un mors (5) comporte une protection contre les surcharges (10) avec un point de déclenchement réglable.

8. Préhenseur (1) selon l'une des revendications précédentes, **caractérisé en ce qu'**un mors (5) comporte un raccordement du vide et/ou un raccordement pour air comprimé.

9. Préhenseur (1) selon l'une des revendications précédentes, **caractérisé en ce qu'**il comporte un moyen de commande ou de réglage d'une force de préhension.

10. Préhenseur (1) selon l'une des revendications précédentes, **caractérisé en ce qu'**il comporte un capteur RFID.
